# EUROPEAN PATENT APPLICATION

(11) **EP 4 036 533 A1**
(43) Date of publication of application: **03.08.2022**
(21) Application number: 21154428.3
(22) Date of filing: 29.01.2021
(51) Int. Cl.: G01F 23/292, G01N 21/31

(54) **APPARATUS FOR DETERMINING A VERTICAL POSITION OF AT LEAST ONE INTERFACE BETWEEN A FIRST COMPONENT AND AT LEAST ONE SECOND COMPONENT AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: Mehta, Kumar Roshan, 71640 Ludwigsburg (DE)
(74) Representative: Patentanwälte Ruff, Wilhelm, Beier, Dauster & Partner mbB

(57) **Abstract**

Apparatus (100) for determining a vertical position of at least one interface (IF1, IF2) between a first component (1) and at least one second component (2, 3, 13), the components (1, 2, 3, 13) being comprised as different layers in a sample container (4), the apparatus (100) comprising:
- a first sensing unit comprising:
- a first light emitting means (5) emitting light having a first wavelength, and
- a first light detector (6) generating a first sensing signal (s1(z)) in response to an intensity of light having the first wavelength being applied to the first light detector (6),

- a second sensing unit comprising:
- a second light emitting means (7) emitting light having a second wavelength, and
- a second light detector (8) generating a second sensing signal (s2(z)) in response to an intensity of light having the second wavelength being applied to the second light detector (8),

- a driving unit (9) adapted to move the sample container (4) relative to the first sensing unit (5, 6) and the second sensing unit (7, 8) in the vertical direction (z),
- an interface position calculation unit (10) being adapted to calculate the vertical position of the at least one interface (IF1, IF2) in response to the first sensing signal (s1(z)) along the vertical direction (z), the second sensing signal (s2(z)) along the vertical direction (z) and a measurement model having a number of parameters, and
- a machine learning unit being adapted to calculate the number of parameters based on training data.

## Description

To process laboratory samples contained in laboratory sample containers typically an interface between the laboratory sample and a further component contained in the laboratory sample container, e.g. ambient air, has to be determined.

EP 2770317 A1 discloses a laboratory automation system for processing components comprised in a sample container comprising an apparatus for determining a vertical position of at least one interface between a first component and at least one second component, the components being comprised as different layers in a sample container.

It is the object of the invention to provide for an apparatus for determining a vertical position of at least one interface between a first component and at least one second component and a laboratory automation system being based on the apparatus as disclosed in EP 2770317 A1, nevertheless providing an even more reliable determination of the vertical interface position.

The apparatus is adapted to detect a vertical position of at least one interface between a first component and at least one second component, the components being comprised as different layers in a conventional transparent sample container or sample tube with or without barcode labels as used in automated laboratory instrumentation. For example, the apparatus can detect horizontal interfaces between different layers within a centrifuged sample tube containing blood, such as interfaces between a serum or plasma layer and either a separation medium layer (in so called tubes) or a cruor (blood cell) layer.

The apparatus comprises a first sensing unit comprising: a first light emitting means emitting light having a first wavelength, and a first light detector generating a first sensing signal in response to an intensity of light having the first wavelength being applied to the first light detector.

The apparatus further comprises a second sensing unit comprising: a second light emitting means emitting light having a second wavelength, and a second light detector generating a second sensing signal in response to an intensity of light having the second wavelength being applied to the second light detector.

The apparatus further comprises a driving unit adapted to move the sample container relative to the first sensing unit and the second sensing unit in the vertical direction.

Regarding the components insofar, reference is also made to the disclosure of EP 2770317 A1.

The apparatus further comprises an interface position calculation unit being adapted to calculate the vertical position of the at least one interface in response to the first sensing signal along the vertical direction, the second sensing signal along the vertical direction and a measurement model having a number of parameters, e.g. between 2 and 200 parameters.

The apparatus further comprises a machine learning unit being adapted to calculate the number of parameters based on training data.

According to an embodiment, the interface position calculation unit maps the first sensing signal along the vertical direction and the second sensing signal along the vertical direction to a model signal along the vertical direction based on the measurement model. The model signal has a number of predefined values, wherein each of the predefined values corresponds to one of the components. The model signal may e.g. have 4 predefined values, e.g. 1, 2, 3, 4. The interface position calculation unit calculates the vertical position of the at least one interface based on the model signal along the vertical direction. For that purpose, the interface position calculation unit may e.g. simply calculate a difference in z direction between the different predefined values to determine the vertical positions(s) of the interface(s).

According to an embodiment, the first and the at least one second component are selected from a group consisting of air, serum, separation gel and cruor.

According to an embodiment the machine learning unit is adapted to extract from the training data first training sensor signals along the vertical direction and second training sensor signals along the vertical direction and corresponding training vertical positions. The training vertical positions may e.g. be generated by means of other kind of measurements and may denote the exact or true vertical positions related to the first training sensor signals and the second training sensor signals. The interface position calculation unit is adapted to calculate vertical positions based on the extracted first training sensor signals along the vertical direction and the extracted second training sensor signals along the vertical direction. The machine learning unit is adapted to calculate the number of parameters based on the extracted training vertical positions and the calculated vertical positions.

According to an embodiment the machine learning unit comprises a long short-term memory [LSTM] recurrent neural network [RNN]. Reference insofar is made to the relevant technical literature.

According to an embodiment the first wavelength ranges between 400 nm and 1200 nm and the second wavelength ranges between 1300 nm and 1700 nm.

According to an embodiment the interface position calculation unit comprises a filter being adapted to filter the model signal along the vertical direction such that abrupt peaks and outlier values are removed from the model signal.

The laboratory automation system for processing components comprised in a sample container comprises the apparatus as described above, and at least one laboratory station functionally coupled to the apparatus, wherein the at least one laboratory station is adapted to operate in response to the detected vertical position of the at least one interface.

According to an embodiment at least one of the laboratory stations is an aliquoter unit having a pipetting unit, the pipetting unit having a tip, wherein during aliquoting the aliquoter unit is adapted to control a vertical position of the tip in response to the detected vertical position of the at least one interface.

The invention will now be described in detail with respect to the attached drawings, wherein:
- Fig. 1: schematically depicts an apparatus for determining vertical positions of interfaces between different components comprised as different layers in a sample container,
- Fig. 2: depicts a first sensor signal in a vertical direction z generated by a first light detector of the apparatus of Fig. 1 and a second sensor signal in the vertical direction z generated by a second light detector of the apparatus of Fig. 1 in a logarithmic scale,
- Fig. 3: depicts a model signal along the vertical direction, and
- Fig. 4: depicts a block diagram of a laboratory system comprising the apparatus of Fig. 1.

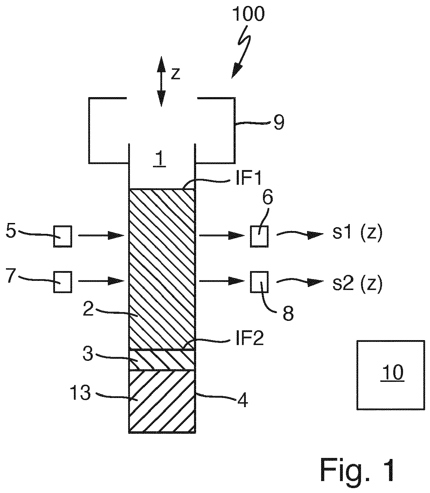

Fig. 1 schematically depicts an apparatus 100 for determining vertical positions of interfaces IF1 and IF2 between different components 1, 2, 3, 13 comprised as different layers in a sample container 4.

The component 1 is air, the component 2 is (blood) serum, the component 3 is separation gel and the component 13 is (blood) cruor.

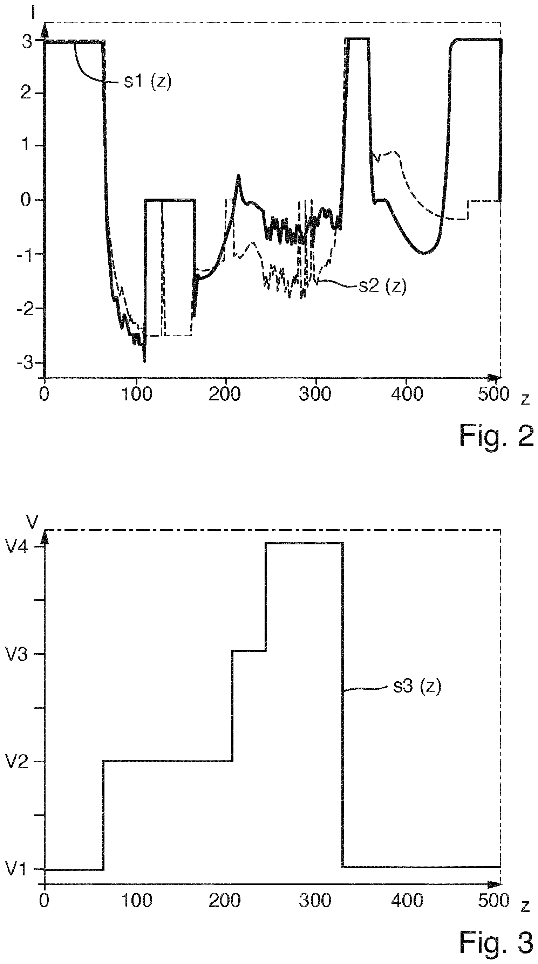

The apparatus 100 comprises a first transmission-based sensing unit comprising a first light emitting means 5 emitting light having a first wavelength, and a first light detector 6 generating a first sensing signal s1(z), see Fig. 2, in response to an intensity of light having the first wavelength originating from the first light emitting means 5, passing through the sample container 4 and finally striking the first light detector 6.

The apparatus 100 further comprises a second transmission-based sensing unit comprising a second light emitting means 7 emitting light having a second wavelength, and a second light detector 8 generating a second sensing signal s2(z), see Fig. 2, in response to an intensity of light having the second wavelength originating from the second light emitting means 7, passing through the sample container 4 and finally striking the second light detector 8.

The first wavelength ranges between 400 nm and 1200 nm and the second wavelength ranges between 1300 nm and 1700 nm.

The apparatus 100 further comprises a driving unit 9 adapted to move the sample container 4 relative to the first sensing unit 5, 6 and the second sensing unit 7, 8 in the vertical direction z. The driving unit 9 may e.g. be embodied as a pick-and-place device, etc.

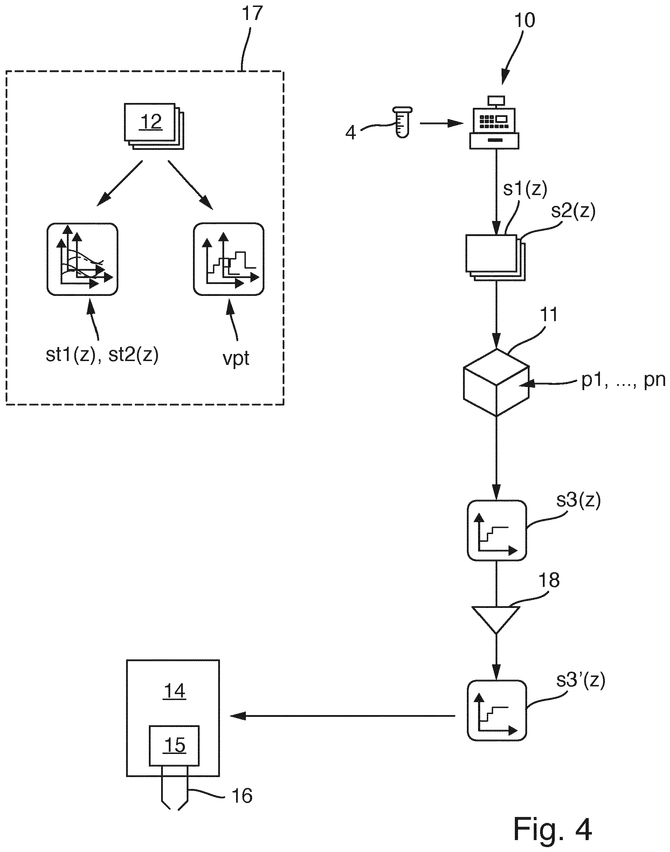

The apparatus 100 further comprises an interface position calculation unit 10 being adapted to calculate the vertical positions of the interfaces IF1, IF2 in response to the first sensing signal s1(z), the second sensing signal s2(z) and a measurement model 11, see Fig. 4, having a number of parameters p1, ..., pn.

The apparatus 100 further comprises a machine learning unit 17, see Fig. 4, being adapted to calculate the number of parameters p1, ..., pn based on training data 12.

Referring to figures 2 and 3, the interface position calculation unit 10 maps the first sensing signal s1(z) and the second sensing signal s2(z) to a model signal s3(z) based on the measurement model 11, wherein the model signal s3(z) has four predefined values v1, v2, v3, v4. Each of the predefined values v1, v2, v3, v4 corresponds to one of the components 1, 2, 3, 13. In detail, the value v1 corresponds to the component 1 in form of air, the value v2 corresponds to the component 2 in form of (blood) serum, the value v3 corresponds to the component 3 in form of separation gel, and the value v4 corresponds to the component 13 in form of (blood) cruor. The interface position calculation unit 10 calculates the vertical positions of the interfaces IF1, IF2 based on the model signal s3(z) along the vertical direction z by simply using the z-value at the transition between the values v1, v2, v3 and v4.The first sensing signal s1(z), the second sensing signal s2(z) and the model signal s3(z) extend over the same vertical range.

It is possible to convert the z values to corresponding heights from the bottom of the sample container 4 in millimeters, if necessary. This calculation is based on pre-measured physical properties of the sample containers, e.g. a diameter, etc. The calculated vertical positions of the interfaces IF1, IF2 may be passed to a pipetting unit 15 where the sample container is then pipetted at an appropriate vertical level z for different samples.

Referring to Fig. 4, the machine learning unit 17 is adapted to extract from the training data 12 first training sensor signals st1(z) along the vertical direction z and second training sensor signals st2(z) along the vertical direction z and corresponding known or measured training vertical positions vpt. During training, the interface position calculation unit 10 calculates vertical positions based on the extracted first training sensor signals st1(z) and the extracted second training sensor signals st2(z), wherein the machine learning unit 17 then calculates the number of parameters p1, ..., pn based on the extracted training vertical positions vpt and the calculated vertical positions. The machine learning unit 17 comprises a long short-term memory [LSTM] recurrent neural network [RNN].

The interface position calculation unit 10 comprises a filter 18 being adapted to filter the model signal s3(z) along the vertical direction z such that outliers or spikes, if any, are removed from the model signal s3(z). The filtered signal is denoted as s3'(z). Outliers or spikes may be caused because the measurement model 11 is not one hundred percent correct. The approach used for outlier detection may be based on width-window size. It is known that the generated output or model signal s3(z) shall be discrete and hence, if there are abrupt changes in the value, which is smaller than the predefined width-window, it is considered as an outlier value and is then removed from the model signal s3(z). Doing an outlier check helps to further improve the interface position determination. This outlier removal step further enables to completely discard a model signal s3(z) and to re-examine the corresponding sample container if the count of positions where the signal values changes after outlier value removal are more than the pre-defined count.

The laboratory automation system depicted in Fig. 4 comprises the apparatus and at least one laboratory station 14 functionally coupled to the apparatus 100, wherein the at least one laboratory station 14 is adapted to operate in response to the detected vertical positions of the interfaces IF1, IF2. The laboratory stations may be embodied as an aliquoter unit 14 having a pipetting unit 15, the pipetting unit 15 having a tip 16, wherein during aliquoting the aliquoter unit 14 is adapted to control a vertical position of the tip 16 in response to the detected vertical positions of the interfaces IF1, IF2.

The invention uses deep learning, especially Long short-term memory [LSTM] Recurrent neural network [RNN], along with outlier detection techniques to correctly determine vertical positions of different interfaces in a centrifuged sample container. The interfaces may be formed between (blood) cruor and separation gel; between separation gel and (blood) serum; and between (blood) serum and air.

A bidirectional LSTM neural network with time distributed layer architecture may be defined. The reason to use bidirectional LSTM is because the vertical positions or liquid levels have contextual information and there is always an order between levels, e.g. a gel region is always in between (blood) cruor and (blood) serum. The bidirectional layer involves duplicating the first recurrent layer in the network so that there are now two layers side-by-side, then providing the input sequence as-is as input to the first layer and providing a reversed copy of the input sequence to the second.

The invention works under acceptable tolerance of tube types, barcode labels, tube thickness and positioning orientation. These variations could be controlled based on how varied the input dataset is used for training.

According to the invention, machine learning may be used to generate the model signal s3(z). Peaks and outliers in the model signal s3(z) may be removed by filtering. The vertical positions of the interfaces and thus a liquid level of (blood) serum may then be calculated based on the filtered model signal s3(z).

## Claims

1. Apparatus (100) for determining a vertical position of at least one interface (IF1, IF2) between a first component (1) and at least one second component (2, 3, 13), the components (1, 2, 3, 13) being comprised as different layers in a sample container (4), the apparatus (100) comprising:
- a first sensing unit comprising:
- a first light emitting means (5) emitting light having a first wavelength, and
- a first light detector (6) generating a first sensing signal (s1(z)) in response to an intensity of light having the first wavelength being applied to the first light detector (6),
- a second sensing unit comprising:
- a second light emitting means (7) emitting light having a second wavelength, and
- a second light detector (8) generating a second sensing signal (s2(z)) in response to an intensity of light having the second wavelength being applied to the second light detector (8),
- a driving unit (9) adapted to move the sample container (4) relative to the first sensing unit (5, 6) and the second sensing unit (7, 8) in the vertical direction (z),
- an interface position calculation unit (10) being adapted to calculate the vertical position of the at least one interface (IF1, IF2) in response to the first sensing signal (s1(z)) along the vertical direction (z), the second sensing signal (s2(z)) along the vertical direction (z) and a measurement model (11) having a number of parameters (p1, ..., pn), and
- a machine learning unit (17) being adapted to calculate the number of parameters (p1, ..., pn) based on training data (12).

2. Apparatus (100) according to claim 1, **characterized in that**
- the interface position calculation unit (10) maps the first sensing signal (s1(z)) along the vertical direction (z) and the second sensing signal (s2(z)) along the vertical direction (z) to a model signal (s3(z)) along the vertical direction (z) based on the measurement model (11), wherein the model signal (s3(z)) has a number of predefined values (v1, v2, v3, v4), wherein each of the predefined values (v1, v2, v3, v4) corresponds to one of the components (1, 2, 3, 13), wherein the interface position calculation unit (10) calculates the vertical position of the at least one interface (IF1, IF2) based on the model signal (s3(z)) along the vertical direction (z).

3. Apparatus (100) according to one of the preceding claims, **characterized in that**
- the first and the at least one second component (1, 2, 3, 13) are selected from a group consisting of air, serum, separation gel and cruor.

4. Apparatus (100) according to one of the preceding claims, **characterized in that**
- the machine learning unit (17) is adapted to extract from the training data (12) first training sensor signals (st1(z)) along the vertical direction (z) and second training sensor signals (st2(z)) along the vertical direction (z) and corresponding training vertical positions (vpt),
- wherein the interface position calculation unit (10) is adapted to calculate vertical positions based on the extracted first training sensor signals (st1(z)) along the vertical direction (z) and the extracted second training sensor signals (st2(z)) along the vertical direction (z), and
- wherein the machine learning unit (17) is adapted to calculate the number of parameters (p1, ..., pn) based on the extracted training vertical positions (vpt) and the calculated vertical positions.

5. Apparatus (100) according to one of the preceding claims, **characterized in that**
- the machine learning unit (17) comprises a long short-term memory [LSTM] recurrent neural network [RNN].

6. Apparatus (100) according to one of the preceding claims, **characterized in that**
- the first wavelength ranges between 400 nm and 1200 nm and the second wavelength ranges between 1300 nm and 1700 nm.

7. Apparatus (100) according to one of claims 2 to 6, **characterized in that**
- the interface position calculation unit (10) comprises a filter (18) being adapted to filter the model signal (s3(z)) along the vertical direction (z) such that abrupt peaks and outlier values are removed from the model signal (s3(z)).

8. Laboratory automation system for processing components comprised in a sample container (4), the system comprising:
- the apparatus (100) according to anyone of the preceding claims, and
- at least one laboratory station (14) functionally coupled to the apparatus (100),
- wherein the at least one laboratory station (14) is adapted to operate in response to the detected vertical position of the at least one interface (IF1, IF2).

9. Laboratory automation system according to claim 8, **characterized in that**
- at least one of the laboratory stations is an aliquoter unit (14) having a pipetting unit (15), the pipetting unit (15) having a tip (16), wherein during aliquoting the aliquoter unit (14) is adapted to control a vertical position of the tip (16) in response to the detected vertical position of the at least one interface (IF1, IF2).
